# EUROPÄISCHE PATENTANMELDUNG

(11) **EP 3 993 315 A1**
(43) Veröffentlichungstag der Anmeldung: **04.05.2022**
(21) Anmeldenummer: 20204728.8
(22) Anmeldetag: 29.10.2020
(51) Int. Cl.: H04L 9/32

(54) **KONSENSMECHANISMUS FÜR EIN VERTEILTES DATENBANKSYSTEM AUF BASIS EINER MESSUNG EINES PHYSIKALISCHEN EREIGNISSES**

(71) Anmelder: Siemens Aktiengesellschaft, 80333 München (DE)
(72) Erfinder: Morra, Carlos, 81541 München (DE)

(57) **Zusammenfassung**

Die Erfindung betrifft ein computerimplementiertes Verfahren zum Einfügen von Daten in ein verteiltes Datenbanksystem, wie z.B. ein Distributed Ledger, mit den Verfahrensschritten:
- Ermitteln (S1) einer Kennzahl eines physikalischen Ereignisses, wie z.B. eines astrophysikalischen Phänomens, wobei durch mindestens zwei verschiedene Messungen des physikalischen Ereignisses jeweils ein Messergebnis erfasst und in Abhängigkeit dieser erfassten Messergebnisse die Kennzahl ermittelt wird,
und
- Generieren (S2) einer Zufallszahl mittels eines Zufallszahlengenerators in Abhängigkeit der Kennzahl,
- Selektieren (S3) eines Knotens des verteilten Datenbanksystems in Abhängigkeit der generierten Zufallszahl zum Einfügen von Daten in das verteilte Datenbanksystem durch den selektierten Knoten.

## Beschreibung

Die Erfindung betrifft ein computerimplementiertes Verfahren zum Einfügen von Daten in ein verteiltes Datenbanksystem, einen Knoten eines verteilten Datenbanksystems, ein System zum Einfügen von Daten in ein verteiltes Datenbanksystem und ein Computerprogrammprodukt.

In einem dezentralen, verteilten Datenbanksystem, insbesondere einem Blockchain-basierten System, regelt ein Konsensmechanismus die Korrektheit von Transaktionen sowie deren Reihenfolge und verhindert Manipulation. Beispielsweise kann ein Knoten des verteilten Datenbanksystems zufällig selektiert werden, um Daten in das verteilte Datenbanksystem einzufügen. Dies ist insbesondere für öffentliche Netzwerke interessant, um ein hohes Maß an Vertraulichkeit, Transparenz und Schutz zu erzielen.

Um die Manipulationssicherheit bei öffentlichen (engl. Permissionles) verteilten Datenbanken bzw. Blockketen/Blockchains zu erhöhen, ist es wünschenswert, dass das Schreibverhalten der Knoten nicht vorhersagbar ist. Beispielsweise bietet Proof-of-Work (PoW) eine Lösung für die zufällige Selektion eines schreibenden Knotens. Proof-of-Work ist allerdings sehr ressourcenintensiv. Alternative Mechanismen, wie z.B. Proof-of-Stake, benötigen zwar weniger Ressourcen, reduzieren aber die Manipulationssicherheit des Netzwerks.

Es ist daher eine Aufgabe der Erfindung, einen ressourcenschonenden und manipulationssicheren Mechanismus zu finden, der ein zufälliges Selektieren eines Knotens zum Einfügen von Daten in ein verteiltes Datenbanksystem ermöglicht.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt.

Die Technologie von Blockketten (engl. Blockchains) bzw. "Distributed Ledgers" ist aktuell eine intensiv diskutierte Technologie, die insbesondere als verteiltes Datenbanksystem realisiert sein kann. Neben Anwendungen für dezentrale Bezahlsysteme (z. B. Bitcoin) werden in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, es reduziert die Transaktionskosten, und es können flexibel neue digitale Dienste angeboten werden, ohne eine dafür speziell eingerichtete Infrastruktur und Vertrauensbeziehungen einrichten zu müssen. Ein durch eine Blockchain geschützter Transaktionsdatensatz (oder kurz Transaktion) umfasst z. B. Programmcode, der auch als sogenannter "Smart Contract" bezeichnet werden kann.

Gemäß einem ersten Aspekt betrifft die Erfindung ein computerimplementiertes Verfahren zum Einfügen von Daten in ein verteiltes Datenbanksystem mit den Verfahrensschritten:
- Ermitteln einer Kennzahl eines physikalischen Ereignisses, wobei durch mindestens zwei verschiedene Messungen des physikalischen Ereignisses jeweils ein Messergebnis erfasst und in Abhängigkeit dieser erfassten Messergebnisse die Kennzahl ermittelt wird,
- Generieren einer Zufallszahl mittels eines Zufallszahlengenerators in Abhängigkeit der Kennzahl,
   und
- Selektieren eines Knotens des verteilten Datenbanksystems in Abhängigkeit der generierten Zufallszahl zum Einfügen von Daten in das verteilte Datenbanksystem durch den selektierten Knoten.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, eingebettete Systeme, Cloud und Edge Geräte, IoT-Geräte, Netzwerkgeräte, Gateway/Bridge-Geräte, Mobilfunkgeräte und andere Kommunikationsgeräte, die rechnergestützt Daten verarbeiten können, Prozessoren und andere elektronische Geräte zur Daten-verarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array), ein PLD (engl. Programmable Logic Device) oder einen ASIC (anwendungs-spezifische integrierte Schaltung, engl. Application-Specific Integrated Circuit), oder einen DSP (Digitaler Signalprozes-sor, engl. Digital Signal Processor) oder einen Grafikprozessor GPU (Graphic Processing Unit) oder KI-Beschleuniger (z.B. Neural Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einem "Modul" oder einer "Einheit" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren.

Unter "Bereitstellen" kann im Zusammenhang mit der Erfindung beispielsweise ein Laden oder ein Speichern, beispielsweise einer Transaktion mit entsprechenden Daten verstanden werden. Dies kann beispielsweise auf oder von einem Speichermodul erfolgen. Unter "Bereitstellen" kann beispielsweise auch ein Übertragen (oder ein Senden oder ein Übermitteln) von entsprechenden Daten von einem Knoten zu einem anderen Knoten der Blockkette oder des verteilten Datenbanksystems (bzw. deren Infrastruktur) verstanden werden.

Unter "Einfügen in das verteilte Datenbanksystem" und dergleichen kann im Zusammenhang mit der Erfindung beispielsweise verstanden werden, dass insbesondere eine Transaktion bzw. die Transaktionen oder ein Datenblock mit seinen Transaktionen an einen oder mehrere Knoten eines verteilten Datenbanksystems übermittelt wird. Werden diese Transaktionen beispielsweise erfolgreich validiert (z. B. durch den/die Knoten), werden diese Transaktionen insbesondere als neuer Datenblock mit mindestens einem vorhandenen Datenblock des verteilten Datenbanksystems verkettet. Hierzu werden die entsprechenden Transaktionen beispielsweise in einem neuen Datenblock gespeichert. Insbesondere kann dieses Validieren und/oder Verketten durch einen vertrauenswürdigen bzw. selektierten Knoten erfolgen.

Insbesondere können ein vertrauenswürdiger Knoten und/oder ein Knoten jeweils eine Knoten-Prüfsumme (z. B. eine digitale Signatur) in einem Datenblock hinterlegen (z. B. in denen von ihnen validierten und erzeugten Datenblock, der dann verkettet wird), um insbesondere eine Identifizierbarkeit des Erstellers des Datenblockes zu ermöglichen und/oder eine Identifizierbarkeit des Knotens zu ermöglichen. Dabei gibt diese Knoten-Prüfsumme an, welcher Knoten beispielsweise den entsprechenden Datenblock mit mindestens einem anderen Datenblock des verteilten Datenbanksystems verkettet hat.

Unter "Transaktion" bzw. "Transaktionen" können im Zusammenhang mit der Erfindung beispielsweise ein Smart-Contract, eine Datenstruktur oder ein Transaktionsdatensatz verstanden werden, der insbesondere jeweils eine der Transaktionen oder mehrere Transkationen umfasst. Unter "Transaktion" bzw. "Transaktionen" können im Zusammenhang mit der Erfindung beispielsweise auch die Daten einer Transaktion eines Datenblocks einer Bockkette (engl. Blockchain) verstanden werden. Eine Transkation kann insbesondere einen Programmcode umfassen, der beispielsweise einen Smart Contract realisiert. Beispielsweise können im Zusammenhang mit der Erfindung unter Transaktion auch eine Steuertransaktionen und/oder Bestätigungstransaktion verstanden werden. Alternativ kann eine Transaktion beispielsweise eine Datenstruktur sein, die Daten speichert (z. B. die Steuerbefehle).

Unter einem "verteilten Datenbanksystem", das beispielsweise auch als verteilte Datenbank bezeichnet werden kann, kann im Zusammenhang mit der Erfindung beispielsweise eine dezentral verteilte Datenbank, eine Blockkette (engl. Blockchain), ein distributed Ledger, ein verteiltes Speichersystem, ein distributed ledger technology (DLT) based system (DLTS), ein revisionssicheres Datenbanksystem, eine Cloud, ein Cloud-Service, eine Blockkette in einer Cloud oder eine Peer-to-Peer Datenbank verstanden werden. Auch können beispielsweise unterschiedliche Implementierungen einer Blockkette oder eines DLTS verwendet werden, wie z. B. eine Blockkette oder ein DLTS, die mittels eines Directed Acylic Graph (DAG), eines kryptographischen Puzzles, einem Hashgraph oder eine Kombination aus den genannten Implementierungsvarianten. Unter einem "verteilten Datenbanksystem" kann beispielsweise auch ein verteiltes Datenbanksystem verstanden werden, von dem zumindest ein Teil seiner Knoten und/oder Geräte und/oder Infrastruktur durch eine Cloud realisiert sind. Beispielsweise sind die entsprechenden Komponenten als Knoten/Geräte in der Cloud (z. B. als virtueller Knoten in einer virtuellen Maschine) realisiert. Dies kann beispielsweise mittels VM-Ware, Amazon Web Services oder Microsoft Azure erfolgen.

Bei dem verteilten Datenbanksystem kann es sich beispielsweise um ein öffentliches verteiltes Datenbanksystem (z. B. eine öffentliche Blockkette) oder ein geschlossenes (oder privates) verteiltes Datenbanksystem (z. B. eine private Blockkette) handeln.

Handelt es sich beispielsweise um ein öffentliches, verteiltes Datenbanksystem, bedeutet dies, dass neue Knoten und/oder Geräte ohne Berechtigungsnachweise oder ohne Authentifizierung oder ohne Anmeldeinformationen oder ohne Credentials dem verteilten Datenbanksystem beitreten können bzw. von diesem akzeptiert werden. Insbesondere können in einem solchen Fall die Betreiber der Knoten und/oder Geräte anonym bleiben. Handelt es sich bei dem verteilten Datenbanksystem beispielsweise um ein geschlossenes verteiltes Datenbanksystem, benötigen neue Knoten und/oder Geräte beispielsweise einen gültigen Berechtigungsnachweis und/oder gültige Authentifizierungsinformationen und/oder gültige Credentials und/oder gültige Anmeldeinformationen, um dem verteilten Datenbanksystem beitreten können bzw. von diesem akzeptiert zu werden.

Unter "Datenblock", der insbesondere je nach Kontext und Realisierung auch als "Glied" oder "Block" bezeichnet sein kann, kann im Zusammenhang mit der Erfindung beispielsweise ein Datenblock eines verteilten Datenbanksystems (z. B. eine Blocckette oder eine Peer-to-Peer Datenbank) verstanden werden, die insbesondere als Datenstruktur realisiert ist und vorzugsweise jeweils eine der Transaktionen oder mehrere der Transaktionen umfasst.

Unter einem "Blockketten-Knoten", "Knoten", "Knoten eines verteilten Datenbanksystems" und dergleichen, können im Zusammenhang mit der Erfindung beispielsweise Geräte (z. B. Feldgeräte), Rechner, Smart-Phones, Clients oder Teilnehmer verstanden werden, die Operationen (mit) dem verteilten Datenbanksystem (z. B. eine Blockkette) durchführen. Solche Knoten können beispielsweise Transaktionen eines verteilten Datenbanksystems bzw. deren Datenblöcke ausführen oder neue Datenblöcke mit neuen Transaktionen in das verteilte Datenbanksystem mittels neuer Datenblöcke einfügen bzw. verketten. Insbesondere kann dieses Validieren und/oder Verketten durch einen vertrauenswürdigen Knoten oder ausschließlich durch vertrauenswürdige Knoten erfolgen.

Bei den Geräten handelt es sich beispielsweise um Geräte eines technischen Systems und/oder industriellen Anlage und/oder eines Automatisierungsnetzes und/oder einer Fertigungsanlage, die insbesondere auch ein Knoten des verteilten Datenbanksystems sind. Dabei können die Geräte beispielsweise Feldgeräte sein oder Geräte im Internet der Dinge sein, die insbesondere auch ein Knoten des verteilten Datenbanksystems sind. Knoten können beispielsweise auch zumindest einen Prozessor umfassen, um z. B. ihre computerimplementierte Funktionalität auszuführen.

Unter einem "Rechner" kann im Zusammenhang mit der Erfindung beispielsweise ein Computer(system), ein Client, ein Smart-Phone, ein Gerät oder ein Server, die jeweils außerhalb der Blockkette angeordnet sind bzw. kein Teilnehmer des verteilten Datenbanksystems (z. B. der Blockkette) sind (also keine Operationen mit dem verteilten Datenbanksystem durchführen oder diese nur abfragen, ohne jedoch Transaktionen durchzuführen, Datenblöcke einfügen), verstanden werden. Alternativ kann insbesondere auch unter einem Rechner ein Knoten des verteilten Datenbanksystems verstanden werden. Mit anderen Worten kann insbesondere unter einem Gerät ein Knoten des verteilten Datenbanksystems verstanden werden oder auch ein Gerät außerhalb der Blockkette bzw. des verteilten Datenbanksystems verstanden werden. Ein Gerät außerhalb des verteilten Datenbanksystems kann beispielsweise auf die Daten (z. B. Transaktionen oder Steuertransaktionen) des verteilten Datenbanksystems zugreifen und/oder von Knoten (z. B. mittels Smart-Contracts und/oder Blockketten-Orakel) angesteuert werden. Wird beispielsweise eine Ansteuerung bzw. Steuerung eines Gerätes (z. B. ein als Knoten ausgebildetes Gerät oder ein Gerät außerhalb des verteilten Datenbanksystems) durch einen Knoten realisiert, kann dies z. B. mittels eines Smart-Contracts erfolgen, der insbesondere in einer Transaktion des verteilten Datenbanksystems gespeichert ist.

Unter einem "physikalischen Ereignis" kann insbesondere ein physikalisches Phänomen verstanden werden, das in einer gewissen Zeitspanne auftritt. Das physikalische Ereignis ist insbesondere nicht oder nur schwer manipulierbar. Es kann insbesondere durch zwei Messungen mittels eines Messinstruments bzw. eines Sensors erfasst und jeweils ein Messergebnis ausgegeben werden. Die Messungen sind vorzugsweise verschieden. Unter "verschiedenen Messungen" können insbesondere voneinander unabhängige und/oder zeitgleiche Messungen verstanden werden. Unter "zeitgleiche Messungen" können insbesondere Messungen verstanden werden, die innerhalb eines vorgegebenen Toleranz- bzw. Zeitbereichs durchgeführt werden. Beispielsweise werden die mindestens zwei verschiedenen Messungen durch zwei verschiedene Beobachter durchgeführt bzw. sind zwei verschiedenen Beobachtern zugeordnet.

Insbesondere kann das physikalische Ereignis nicht durch einen Prozess oder einen Menschen induziert sein, sondern insbesondere zufällig bzw. nicht vorhersagbar stattfinden.

Unter einer "Kennzahl eines physikalischen Ereignisses" kann insbesondere ein Messwert, eine physikalische Größe, ein Parameter, eine Charakteristik o.ä. verstanden werden. Beispielsweise kann es sich um eine Größeninformation, eine Helligkeit, eine Lautstärke, etc. handeln, die dem physikalischen Ereignis zugeordnet ist bzw. dieses charakterisiert.

Das erfindungsgemäße Verfahren ist insbesondere geeignet, einen Knoten eines verteilten Datenbanksystems zu selektieren, der nachfolgend Daten in das verteilte Datenbanksystem einfügen kann. Es ist ein Vorteil der vorliegenden Erfindung, dass die Methode sowohl für öffentliche als auch für private Netzwerke genutzt werden kann. Das Verfahren ermöglicht einen besseren Manipulationsschutz als alternative Konsensmechanismen und erfüllt das Zufallskriterium. Außerdem verbraucht das Verfahren weniger Energie/Ressourcen als übliche Mechanismen, wie z.B. Proof-of-Work.

In einer Ausführungsform des computerimplementierten Verfahrens kann die Kennzahl anhand einer Mehrheitsabstimmung auf eines der Messergebnisse oder durch Bildung eines Mittelwerts der Messergebnisse ermittelt werden.

Unter einer "Mehrheitsabstimmung" kann insbesondere eine Abstimmung unter den Knoten, die das physikalische Ereignis gemessen und jeweils ein Messergebnis erfasst haben, verstanden werden. Damit kann eine Einigung auf ein Messergebnis erzielt werden.

In einer Ausführungsform des computerimplementierten Verfahrens kann das physikalische Ereignis durch mindestens zwei verschiedene Messungen beobachtbar und manipulationsgeschützt sein.

In einer Ausführungsform des computerimplementierten Verfahrens können die mindestens zwei verschiedenen Messungen an mindestens zwei voneinander separierten, geographischen Orten und/oder zeitgleich durchgeführt werden.

Dies ermöglicht eine unabhängige Prüfung der jeweiligen Messergebnisse. Durch eine Mehrheitsabstimmung oder Mittelung der Messergebnisse kann die Kennzahl manipulationsgeschützt ermittelt werden. Insbesondere kann dafür eine Zeitgenauigkeit für die zeitgleichen Messungen vorab definiert werden. Ebenso kann eine Minimal- oder Maximaldistanz für die örtliche Trennung vorgegeben sein.

In einer Ausführungsform des computerimplementierten Verfahrens kann das physikalische Ereignis von astrophysikalischer, geophysikalischer oder quantenphysikalischer Natur sein.

Dies hat insbesondere den Vorteil, dass das physikalische Ereignis nur bedingt vorhersagbar und manipulationsgeschützt ist. Außerdem kann ein solches physikalisches Ereignis von mindestens zwei verschiedenen Beobachtern gemessen werden.

Ein astrophysikalisches Ereignis ist beispielsweise eine Sonnenfleckenaktivität oder eine Helligkeitsvariabilität eines astrophysikalischen Objekts, z.B. eines Sterns. Ein geophysikalisches Ereignis ist beispielsweise eine Vulkanaktivität oder ein Erdbeben. Ein quantenphysikalisches Ereignis ist beispielsweise ein Teilchenzerfall. Mittels eins geeigneten Messgeräts/Messinstruments kann eine physikalische Größe des physikalischen Ereignisses erfasst und als Messergebnis ausgegeben werden.

In einer Ausführungsform des computerimplementierten Verfahrens kann die Kennzahl und/oder die Zufallszahl mittels einer weiteren Messung überprüft und ein Prüfungsergebnis ausgegeben werden und anhand des Prüfungsergebnisses die Selektion des Knotens validiert werden.

Durch eine weitere Messung des physikalischen Ereignisses kann auf einfache Weise die Selektion des Knotens geprüft werden. Dies ermöglicht eine unabhängige Überprüfung der Schreibberechtigung des selektieren Knotens.

In einer Ausführungsform des computerimplementierten Verfahrens kann für Kennzahlen und/oder Messergebnisse, die innerhalb eines vorgegebenen Toleranzbereichs ähnlich zueinander sind, eine eindeutige Zufallszahl generiert werden.

Es kann beispielsweise ein Toleranzbereich für die Messungen des physikalischen Ereignisses vorgegeben werden. Damit kann beispielsweise eine Messungenauigkeit ausgeglichen werden.

In einer Ausführungsform des computerimplementierten Verfahrens können die Daten durch den selektierten Knoten in das verteilte Datenbanksystem eingefügt werden.

Der selektierte Knoten ist demnach berechtigt, Daten in das verteilte Datenbanksystem einzufügen.

In einer Ausführungsform des computerimplementierten Verfahrens kann das verteilte Datenbanksystem als ein Distributed Ledger, beispielsweise als eine Blockkette, realisiert sein.

Gemäß einem zweiten Aspekt betrifft die Erfindung einen Knoten, auch als Beobachterknotens bezeichnet, eines verteilten Datenbanksystems, der derart eingerichtet ist,
- ein Messergebnis einer Messung eines physikalischen Ereignisses zu erfassen, wobei die Messung zusätzlich zu mindestens einer weiteren Messung des physikalischen Ereignisses durch einen weiteren Knoten des verteilten Datenbanksystems erfolgt,
- das Messergebnis an mindestens diesen weiteren Knoten zu übermitteln,
- ein weiteres Messergebnis der weiteren Messung des weiteren Knotens zu empfangen,
   und
- eine Kennzahl in Abhängigkeit dieser erfassten Messergebnisse zu ermitteln und auszugeben.

Gemäß einem weiteren Aspekt betrifft die Erfindung ein System zum Einfügen von Daten in ein verteiltes Datenbanksystem, umfassend:
- mindestens zwei Knoten gemäß der Erfindung,
- einen Zufallsgenerator, der derart eingerichtet ist, eine Zufallszahl in Abhängigkeit der Kennzahl zu generieren,
- eine Selektionseinheit, die derart eingerichtet ist, einen Knoten des verteilten Datenbanksystems in Abhängigkeit der generierten Zufallszahl zum Einfügen von Daten in das verteilte Datenbanksystem zu selektieren.

Das System kann beispielsweise als Teil eines Netzwerks, das das verteilte Datenbanksystem realisiert, ausgestaltet sein. Insbesondere können der Zufallszahlengenerator und/oder die Selektionseinheit jeweils als unabhängige Knoten des verteilten Datenbanksystems und/oder als Teil eines Knotens gemäß der Erfindung realisiert sein. Die Selektionseinheit kann insbesondere derart eingerichtet sein, mindestens eine Information über die Selektion eines bestimmten Knotens bereitzustellen.

In einer Ausführungsform des Systems kann der Zufallszahlengenerator eingerichtet sein, für Kennzahlen und/oder Messergebnisse, die innerhalb eines vorgegebenen Toleranzbereichs ähnlich zueinander sind, eine eindeutige Zufallszahl zu generieren.

Des Weiteren betrifft die Erfindung ein Computerprogrammprodukt, das direkt in einen programmierbaren Computer ladbar ist, umfassend Programmcodeteile, die bei der Ausführung des Programms durch einen Computer diesen veranlassen, die Schritte eines erfindungsgemäßen Verfahrens auszuführen.

Ein Computerprogrammprodukt kann beispielsweise auf einem Speichermedium, wie z.B. Speicherkarte, USB-Stick, CD-ROM, DVD, ein nichtflüchtiger/dauerhaftes Speichermedium (engl. Non-transitory storage Medium) oder auch in Form einer herunterladbaren Datei von einem Server in einem Netzwerk bereitgestellt oder geliefert werden.

Ausführungsbeispiele der Erfindung sind in den Zeichnungen beispielhaft dargestellt und werden anhand der nachfolgenden Beschreibung näher erläutert. Es zeigen:
- Fig. 1:: ein erstes Ausführungsbeispiel der Erfindung; und
- Fig. 2:: ein zweites Ausführungsbeispiel der Erfindung.

Einander entsprechende Teile sind in allen Figuren mit den gleichen Bezugszeichen versehen.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis des/der Verfahrensanspruchs/Verfahrensansprüche alle im Stand der Technik üblichen Möglichkeiten zur Realisierung der Erfindung selbstverständlich bekannt, sodass es insbesondere einer eigenständigen Offenbarung in der Beschreibung nicht bedarf.

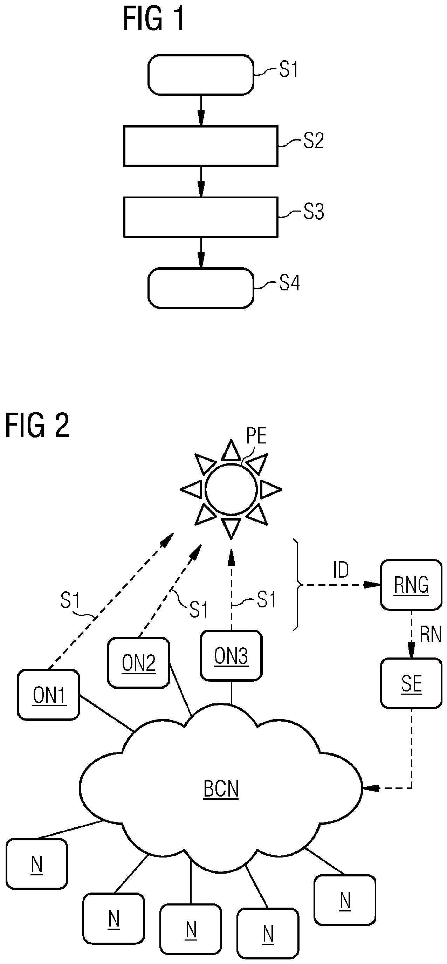

Figur 1 zeigt ein Ausführungsbeispiel der Erfindung als Flussdiagramm. Es sind Verfahrensschritte des computerimplementierten Verfahrens zum Einfügen von Daten in ein verteiltes Datenbanksystem gezeigt. Hierbei kann es sich beispielsweise um ein dezentrales, verteiltes Datenbanksystem handeln. Beispielsweise ist dieses als Distributed Ledger realisiert.

Das verteilte Datenbanksystem umfasst eine Vielzahl von Knoten/Geräten, die zumindest teilweise eingerichtet sind, Daten in das verteilte Datenbanksystem einzufügen. Mit dem nachstehend beschriebenen Verfahren wird auf Basis einer Zufallszahl einer dieser Knoten selektiert, der berechtigt ist, einen nächsten Datenblock in das verteilte Datenbanksystem zu schreiben. Das nachfolgend beschriebene Verfahren bietet insbesondere einen höheren Manipulationsschutz als bekannte Konsensmechanismen.

Im Verfahrensschritt S1 wird eine Kennzahl eines physikalischen Ereignisses ermittelt, wobei durch mindestens zwei verschiedene Messungen des physikalischen Ereignisses jeweils ein Messergebnis erfasst und in Abhängigkeit dieser erfassten Messergebnisse die Kennzahl ermittelt wird. Ein Messergebnis kann beispielsweise mit einem geeigneten Messinstrument erfasst werden. Das Messergebnis wird einem Beobachter(knoten) bereitgestellt.

Beispielsweise handelt es bei dem physikalischen Ereignis um ein astrophysikalisches Ereignis, wie z.B. eine zeitliche Veränderung der Helligkeit eines Sterns. Dieses physikalische Ereignis wird von mindestens zwei Beobachtern/Beobachterknoten mittels geeigneter Messinstrumente beobachtet und anhand der Beobachtung jeweils ein Messergebnis erfasst. Die Beobachter sind vorzugsweise räumlich voneinander getrennt und/oder unabhängig voneinander. Vorzugsweise finden die Messungen innerhalb eines vorgegebenen Zeitraums bzw. zeitgleich statt.

Ein Messergebnis kann beispielsweise eine Helligkeitskurve des Sterns sein. Die Messergebnisse können jeweils eine Messungenauigkeit aufweisen. Es kann anhand eines vorgegebenen Toleranzbereichs geprüft werden, ob die jeweiligen Messergebnisse unter Berücksichtigung ihrer zugeordneten Messungenauigkeit ähnlich zueinander sind.

Alternativ kann das physikalische Ereignis eine Sonnenfleckenaktivität der Sonne betreffen. Hierbei kann das Messergebnis beispielsweise eine Anzahl, Größe und/oder Form der messbaren Sonnenflecken sein.

Aus diesen mindestens zwei Messergebnissen wird eine Kennzahl für das physikalische Ereignis ermittelt. Die Kennzahl kann beispielsweise mittels einer Mehrheitsabstimmung oder durch Bilden eines Mittelwerts der Messergebnisse berechnet werden. Für eine Mehrheitsabstimmung kann ein Austausch der jeweiligen Messergebnisse der Beobachter(knoten) nötig sein. Innerhalb eines Toleranzbereichs ähnlichen Messergebnissen können insbesondere eine eindeutige Kennzahl liefern.

Eine Kennzahl kann beispielsweise eine Maximalhelligkeit, eine Veränderungsrate, eine Form oder eine anderen anhand der Messergebnisse ableitbare Größe sein. Die ermittelte Kennzahl für das physikalische Ereignis wird ausgegeben.

Im nächsten Verfahrensschritt S2 wird die ermittelte Kennzahl einem Zufallszahlengenerator übermittelt und mittels des Zufallszahlengenerator in Abhängigkeit der Kennzahl eine Zufallszahl generiert. Die Zufallszahl wird ausgegeben.

Im nächsten Verfahrensschritt S3 wird in Abhängigkeit der Zufallszahl ein Knoten des verteilten Datenbanksystems selektiert. Dieser selektierte Knoten ist berechtigt, Daten in das verteilte Datenbanksystem einzufügen. Insbesondere kann der selektierte den nächstfolgenden Datenblock in das verteilte Datenbanksystem einfügen.

Beispielsweise kann jedem beteiligten Knoten des verteilten Datenbanksystems eine Identifikationsnummer o.ä. zugeordnet sein, welche mit der Zufallszahl abgeglichen wird. Alternativ oder zusätzlich kann der Zufallszahlengenerator beispielsweise eingerichtet sein, lediglich Zufallszahlen auszugeben, die Identifikationsnummern der Knoten des verteilten Datenbanksystems eindeutig zugeordnet sind. Es kann aber auch eine Zuordnung einer jeweiligen Zufallszahl zu einem jeweiligen Knoten vorgegeben sein, so dass eine eindeutige Selektion eines Knotens anhand der Zufallszahl ermöglicht wird.

Im nächsten Verfahrensschritt S4 fügt der selektierte Knoten Daten in das verteilte Datenbanksystem ein. In anderen Worten, der selektierte Knoten wird berechtigt, Daten in das verteilte Datenbanksystem einzufügen.

Figur 2 zeigt ein weiteres Ausführungsbeispiel der Erfindung in schematischer Blockdarstellung. Es ist ein verteiltes Datenbanksystem gezeigt, dass als Blockchain realisiert ist und im Folgenden als Blockchain-Netzwerk BCN bezeichnet wird. Das Netzwerk umfasst eine Vielzahl von Knoten ON1, ON2, ON3, N.

Die Knoten ON1, ..., ON3 (im Weiteren auch als Beobachterknoten bezeichnet) sind jeweils derart eingerichtet, ein Messergebnis einer Messung eines physikalischen Ereignisses PE zu erfassen S1, wobei die Messung zusätzlich zu mindestens einer weiteren Messung des physikalischen Ereignisses PE durch einen weiteren Knoten des verteilten Datenbanksystems erfolgt, das Messergebnis an mindestens diesen weiteren Knoten zu übermitteln, ein weiteres Messergebnis der weiteren Messung des weiteren Knotens zu empfangen, und eine Kennzahl ID für das physikalisches Ereignis PE in Abhängigkeit dieser erfassten Messergebnisse zu ermitteln und auszugeben. Dazu kann ein solcher (Beobachter-) Knoten ON1, ..., ON3 mindestens einen Prozessor umfassen.

Ein solcher (Beobachter-)Knoten ON1 kann ein Messeinheit zum Erfassen des Messergebnisses, eine Sendeeinheit zum Übermitteln des Messergebnisses an einen anderen Knoten ON2, ON3, eine Empfangseinheit zum Empfangen eines weiteren Messergebnisses eines weiteren Knotens ON2, ON3 und ein Ausgabemodul zum Ausgeben der Kennzahl umfassen. Des Weiteren kann ein solcher (Beobachter-) Knoten ON1, ..., ON3 ein Berechnungsmodul umfassen, das derart eingerichtet ist, die Kennzahl ID anhand einer Mehrheitsabstimmung auf eines der Messergebnisse oder durch Bildung eines Mittelwerts der Messergebnisse zu berechnen.

Ein solcher (Beobachter-) Knoten ON1, ..., ON3 kann beispielsweise an ein Messinstrument, wie z.B. ein Sensor, ein Teleskop oder Mikroskop, gekoppelt sein. Alternativ kann ein solcher Knoten Messergebnisse des physikalischen Ereignisses PE von einem Messinstrument empfangen. Beispielsweise kann die Messeinheit des (Beobachter-)Knotens über eine Kommunikationsverbindung relevante Messergebnisse von einem Messinstrument abrufen.

Vorzugsweise sind diese (Beobachter-) Knoten ON1, ..., ON3 miteinander über das Netzwerk BCN gekoppelt, so dass beispielsweise eine Mehrheitsabstimmung über die Messergebnisse zur Ermittlung der Kennzahl ID des physikalischen Ereignisses PE durchgeführt werden kann.

Der Konsens- bzw. Mehrheitsabstimmungsmechanismus der (Beobachter-)Knoten wird durch vereinbarte Regeln betrieben. Diese Regeln können beispielweise durch eine Mehrheit der Knoten durch algorithmische und/oder Smart Contract-Mechanismen vereinbart bzw. aktualisiert werden.
Die ermittelt Kennzahl ID wird einem Zufallszahlengenerator RNG übermittelt. Der Zufallszahlengenerator RNG kann Teil eines Knotens des Netzwerks BCN sein, oder selbst als Knoten des Netzwerks realisiert sein. Der Zufallszahlengenerator RNG berechnet in Abhängigkeit der Kennzahl ID eine Zufallszahl RN. Der Zufallszahlengenerator RNG ist derart eingerichtet, für Kennzahlen und/oder Messergebnisse, die innerhalb eines vorgegebenen Toleranzbereichs ähnlich zueinander sind, eine eindeutige Zufallszahl RN zu generieren.

Die ermittelte Zufallszahl RN wird einer Selektionseinheit übermittelt, die als Teil des Netzwerks BCN realisiert sein kann. Die Selektionseinheit ist eingerichtet, in Abhängigkeit der Zufallszahl einen Knoten N des Blockchain-Netzwerks BCN zu ermitteln, der den nächstfolgenden Datenblock schreiben darf. Die Selektionseinheit kann insbesondere derart eingerichtet sein, mindestens eine Information, wie z.B. eine Nachricht, über die Selektion eines bestimmten Knotens bereitzustellen.

Die Beobachterknoten ON1, ..., ON3, die zur Selektion eines Knotens N zum Einfügen von Daten in das Blockchain-System geeignet sind, kommunizieren miteinander. Insbesondere wird die Kennzahl ID durch mindestens zwei Messungen des physikalischen Ereignisses PE durch mindestens zwei dieser Beobachterknoten ON1, ON2 ermittelt. Ein weiterer dieser Beobachterknoten ON3 kann insbesondere durch eine weitere, zeitgleiche Messung des physikalischen Ereignisses PE die Kennzahl ID überprüfen. Anhand des Prüfungsergebnisses kann die Zufallszahl RN und/oder die Selektion eines Knotens N validiert werden. Bei einem negativen Prüfungsergebnis kann beispielsweise das Schreiben durch den selektierten Knoten verhindert werden.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Computerimplementiertes Verfahren zum Einfügen von Daten in ein verteiltes Datenbanksystem mit den Verfahrensschritten:
- Ermitteln (S1) einer Kennzahl (ID) eines physikalischen Ereignisses (PE), wobei durch mindestens zwei verschiedene Messungen des physikalischen Ereignisses jeweils ein Messergebnis erfasst und in Abhängigkeit dieser erfassten Messergebnisse die Kennzahl ermittelt wird,
- Generieren (S2) einer Zufallszahl (RN) mittels eines Zufallszahlengenerators in Abhängigkeit der Kennzahl,
und
- Selektieren (S3) eines Knotens des verteilten Datenbanksystems in Abhängigkeit der generierten Zufallszahl zum Einfügen von Daten in das verteilte Datenbanksystem durch den selektierten Knoten.

2. Computerimplementiertes Verfahren nach Anspruch 1, wobei die Kennzahl anhand einer Mehrheitsabstimmung auf eines der Messergebnisse oder durch Bildung eines Mittelwerts der Messergebnisse ermittelt wird.

3. Computerimplementiertes Verfahren nach einem der vorhergehenden Ansprüche, wobei das physikalische Ereignis durch mindestens zwei verschiedene Messungen beobachtbar und manipulationsgeschützt ist.

4. Computerimplementiertes Verfahren nach einem der vorhergehenden Ansprüche, wobei die mindestens zwei verschiedenen Messungen an mindestens zwei voneinander separierten, geographischen Orten und/oder zeitgleich durchgeführt werden.

5. Computerimplementiertes Verfahren nach einem der vorhergehenden Ansprüche, wobei das physikalische Ereignis von astrophysikalischer, geophysikalischer oder quantenphysikalischer Natur ist.

6. Computerimplementiertes Verfahren nach einem der vorhergehenden Ansprüche, wobei die Kennzahl und/oder die Zufallszahl mittels einer weiteren Messung überprüft und ein Prüfungsergebnis ausgegeben wird und anhand des Prüfungsergebnisses die Selektion des Knotens validiert wird.

7. Computerimplementiertes Verfahren nach einem der vorhergehenden Ansprüche, wobei für Kennzahlen und/oder Messergebnisse, die innerhalb eines vorgegebenen Toleranzbereichs ähnlich zueinander sind, eine eindeutige Zufallszahl generiert wird.

8. Computerimplementiertes Verfahren nach einem der vorhergehenden Ansprüche, wobei die Daten durch den selektierten Knoten in das verteilte Datenbanksystem eingefügt (S4) werden.

9. Computerimplementiertes Verfahren nach einem der vorhergehenden Ansprüche, wobei das verteilte Datenbanksystem als ein Distributed Ledger, beispielsweise als eine Blockkette, realisiert ist.

10. Knoten (ON1, ..., ON3) eines verteilten Datenbanksystems, der derart eingerichtet ist,
- ein Messergebnis einer Messung eines physikalischen Ereignisses (PE) zu erfassen, wobei die Messung zusätzlich zu mindestens einer weiteren Messung des physikalischen Ereignisses durch einen weiteren Knoten des verteilten Datenbanksystems erfolgt,
- das Messergebnis an mindestens diesen weiteren Knoten zu übermitteln,
- ein weiteres Messergebnis der weiteren Messung des weiteren Knotens zu empfangen,
und
- eine Kennzahl in Abhängigkeit dieser erfassten Messergebnisse zu ermitteln und auszugeben.

11. System (SYS) zum Einfügen von Daten in ein verteiltes Datenbanksystem, umfassend:
- mindestens zwei Knoten (ON1, ..., ON3) gemäß Anspruch 10,
- einen Zufallsgenerator (RNG), der derart eingerichtet ist, eine Zufallszahl (RN) in Abhängigkeit der Kennzahl zu generieren,
und
- eine Selektionseinheit (SE), die derart eingerichtet ist, einen Knoten des verteilten Datenbanksystems in Abhängigkeit der generierten Zufallszahl (RN) zum Einfügen von Daten in das verteilte Datenbanksystem zu selektieren.

12. System nach Anspruch 11, wobei der Zufallszahlengenerator eingerichtet ist, für Kennzahlen und/oder Messergebnisse, die innerhalb eines vorgegebenen Toleranzbereichs ähnlich zueinander sind, eine eindeutige Zufallszahl (RN) zu generieren.

13. Computerprogrammprodukt, das direkt in einen programmierbaren Computer ladbar ist, umfassend Programmcodeteile, die dazu geeignet sind, die Schritte des Verfahrens nach einem der Ansprüche 1 bis 9 durchzuführen.
